# FASCICULE DE BREVET EUROPEEN

(11) **EP 3 976 696 B1**
(45) Date de publication et mention de la délivrance du brevet: **05.07.2023**
(21) Numéro de dépôt: 20727633.8
(22) Date de dépôt: 22.05.2020
(51) Int. Cl.: C08J 7/02, B29C 71/00, C08J 7/04, C08J 7/05, C08J 7/06, C08J 7/044

(54) **PROCÉDÉ DE TRAITEMENT D'UNE PIÈCE POLYMÈRE EN VUE DE MODIFIER SA RUGOSITÉ ET DE LA FONCTIONNALISER**
VERFAHREN ZUR BEHANDLUNG EINES POLYMEREN WERKSTÜCKS ZUR VERÄNDERUNG SEINER RAUIGKEIT UND ZU SEINER FUNKTIONALISIERUNG
PROCESS FOR TREATING A POLYMERIC WORKPIECE IN ORDER TO MODIFY ITS ROUGHNESS AND TO FUNCTIONALISE IT

(30) Priorité: 24.05.2019 FR 1905530
(43) Date de publication de la demande: 06.04.2022
(73) Titulaire: Commissariat à l'Energie Atomique et aux Energies Alternatives, 75015 Paris (FR)
(72) Inventeur: DELMAS, Jérôme, 38054 GRENOBLE cedex 09 (FR); CAPRON, Philippe, 38054 GRENOBLE cedex 09 (FR); CHAPUIS, Marlène, 38054 GRENOBLE cedex 09 (FR); GASSO PUCHAL, Xavier, 08174 Sant Cugat del Vallés (ES); PONCELET, Olivier, 38054 GRENOBLE cedex 09 (FR); ROUGEAUX, Isabelle, 38054 GRENOBLE cedex 09 (FR)
(74) Mandataire: Brevalex
(86) Numéro de dépôt international: PCT/EP2020/064304
(87) Numéro de publication internationale: WO 2020/239630

(56) Documents cités:
- FR-A1- 3 056 122
- FR-A1- 3 056 146
- US-A1- 2010 133 477

## Description

### DOMAINE TECHNIQUE

La présente invention a trait à un procédé de traitement d'une pièce polymère mettant en oeuvre une exposition spécifique de cette pièce à des vapeurs de solvant(s), ce procédé pouvant avoir pour finalité la modification de la rugosité de surface de ladite pièce et la fonctionnalisation de ladite pièce par au moins un matériau d'intérêt par adhésion du matériau à la surface de la pièce ou par intégration du matériau au sein de ladite pièce par encapsulation de celui-ci.

L'invention peut trouver des applications dans la réalisation de pièces polymères présentant de nouvelles propriétés par rapport à leurs propriétés d'origine, ces nouvelles propriétés étant conférées par la modification de la rugosité de surface et la fonctionnalisation, ces nouvelles propriétés pouvant être des propriétés antireflet, antisalissure, adhésives ou non adhésives, hydrophiles, hydrophobes, oléophiles, oléophobes, antibactériennes, anti-contrefaçon, anti-givre, anti-rayure, ignifuges, dissipatives de charges électriques, de nettoyabilité, d'antivieillissement, de coloration, de friction, de glissement, de conductivité électrique, de dopage ou de réticulation de polymères.

### ÉTAT DE LA TECHNIQUE ANTÉRIEURE

Le traitement de pièces en matériau polymère par exposition à des vapeurs de solvant a déjà fait l'objet de nombreux développements, notamment dans le but d'effectuer le dégraissage ou le polissage de ces pièces.

Un tel traitement réside dans l'immersion de la pièce à traiter dans un milieu comprenant le solvant porté à ébullition. De façon connue et brièvement rappelée ici, le processus physique mis en jeu lors de l'interaction entre un solvant à l'état gazeux, et une pièce en matériau polymère, réside dans l'absorption du solvant miscible au polymère, jusqu'à ce que l'équilibre des potentiels chimiques soit atteint. Plus précisément, le processus d'absorption de solvant résulte d'une séquence de deux étapes distinctes, à savoir la première consistant en la pénétration du solvant dans la zone superficielle, laquelle est solubilisée grâce à l'action du solvant, et la seconde relative à la diffusion du solvant vers le coeur de l'échantillon, dans la direction du gradient de concentration en solvant dans la pièce. Le processus d'adsorption peut être tributaire de la vitesse de condensation de la phase vapeur en liquide et peut être facilité en ajoutant des charges électrostatiques dans la phase vapeur.

Les deux principales conséquences primaires de l'absorption de solvants sont la plastification et le gonflement de la pièce polymère. En régime transitoire de sorption, un gradient de concentration de solvant s'établit dans l'épaisseur de la pièce. La couche superficielle tend à gonfler lors de l'absorption, mais son expansion dans le plan de la surface est bloquée par son adhésion au coeur non gonflé.

Pendant l'exposition aux vapeurs de solvant, la couche superficielle de la pièce voit ses propriétés physicochimiques modifiées, avec notamment une viscosité qui se réduit. Après l'arrêt de l'exposition aux vapeurs de solvant, la pièce se plastifie.

Cette exposition aux vapeurs de solvant est notamment employée pour réduire la rugosité de surface d'une pièce polymère. Le principe physique mis en oeuvre consiste à condenser les vapeurs d'un solvant ayant des paramètres de solubilité satisfaisants à la surface de la pièce. En pratique, cela consiste à mettre au contact dans une même enceinte la pièce polymère à une température dite « froide » (c'est-à-dire inférieure ou égale à la température ambiante) et des vapeurs de solvant à une température dite « chaude » (plusieurs dizaines de degrés Celsius) provenant d'un bain liquide en ébullition. Cette phase de traitement par vapeurs peut être éventuellement associée à des étapes supplémentaires de traitement de surface de type abrasif.

Cependant, la mise en oeuvre de ce type de procédé conduit généralement à des problèmes d'homogénéité de traitement de la pièce, dont la surface s'avère irrégulière, voire entachée de défauts comme des craquelures. L'hétérogénéité du résultat final provient d'une différence de pénétration et de dispersion des molécules pénétrantes dans la matrice polymère.

A titre alternatif et pour tenter de trouver une solution aux inconvénients susmentionnés, il a été proposé dans l'art antérieur des procédés de traitement d'une pièce polymère ne jouant plus sur un différentiel de température entre la pièce à traiter et les vapeurs de solvant aptes à créer une hétérogénéité de surface, un exemple d'un tel procédé étant celui décrit dans FR 3056146.

Pour ce faire, il est prévu de mettre en oeuvre ce procédé dans un dispositif comprenant une enceinte renfermant le substrat à modifier dans une zone supérieure et un récipient comprenant le solvant sous une forme liquide (avant vaporisation) dans une zone inférieure, ledit dispositif comprenant des moyens de régulation de la température sur toute la paroi de l'enceinte, de sorte à réduire avantageusement la présence et les conséquences néfastes de ce gradient de température et comprenant également un mélangeur de sorte à aboutir à une plus grande homogénéité de concentration de vapeurs de solvant dans l'enceinte, et donc autour de la pièce à traiter. Le procédé décrit dans FR 3056146 comprend les étapes suivantes :
- une étape de contrôle du système de régulation de température, de manière à porter la température de l'enceinte et de la pièce à une température de traitement supérieure ou égale à la température d'ébullition du solvant ;
- une étape d'exposition de la pièce à traiter aux vapeurs de solvant, dans l'enceinte, à la température de traitement ; et
- durant l'exposition de la pièce à traiter aux vapeurs de solvant, une étape d'actionnement du mélangeur de gaz.

Une variante de ce procédé est décrite dans FR 3056122, où le substrat polymère à modifier est préalablement recouvert d'un film de particules solides, l'exposition à des vapeurs de solvant générées par chauffage servant à la fixation des particules sur le substrat polymère.

Que ce soient dans les procédés décrits dans FR 3056146 et FR 3056122, les vapeurs de solvant sont produites par chauffage dans une enceinte comprenant le substrat à traiter.

Par ailleurs, dans FR 3056122, le procédé décrit présente les limitations suivantes :
- pour la fonctionnalisation de substrats polymères, il nécessite la mise en place d'étapes séquentielles dont une étape préalable de mise en contact avec le substrat avec un film de particules solides (destinées à assurer la fonctionnalisation) avant l'étape de mise en contact avec des vapeurs de solvant ;
- le film de particules solides utilisé pour la fonctionnalisation du substrat polymère conserve sa morphologie après exposition aux vapeurs de solvant, celles-ci contribuant à la modification en surface du substrat, ce qui permet de fixer le film de particules dans sa morphologie d'origine ;
- à l'issue du procédé, le film de particules fixé au substrat n'est pas encapsulé dans celui-ci, du fait que l'action des vapeurs de solvant n'agit qu'en superficie du substrat polymère.

Les auteurs de la présente invention se sont proposé de mettre au point un procédé de traitement d'une pièce polymère qui ne présente pas les limitations des procédés mentionnés ci-dessous

### EXPOSÉ DE L'INVENTION

Ainsi, l'invention a trait, de manière générale, à un procédé de traitement d'une pièce polymère comprenant une étape de mise en contact de ladite pièce avec des vapeurs de solvant(s) aptes à solubiliser au moins en partie ladite pièce, cette étape de mise en contact étant effectuée sous vide.

Plus spécifiquement, l'invention a trait à un procédé de traitement d'une pièce polymère, qui est un procédé de modification de la rugosité de la surface de ladite pièce polymère et de fonctionnalisation de ladite pièce polymère, comprenant une étape de mise en contact de ladite pièce avec des vapeurs de solvant(s) aptes à solubiliser au moins en partie ladite pièce, cette étape de mise en contact étant effectuée sous vide et comprenant, avant l'étape de mise en contact ou après l'étape de mise en contact, une étape de dépôt sur tout ou partie de la pièce d'au moins un matériau de fonctionnalisation, le ou lesdits matériaux de fonctionnalisation étant des polymères conducteurs de l'électricité et/ou des polymères organophosphorés.

Par pièce polymère, il est précisé qu'il s'agit d'une pièce en un matériau comprenant un ou plusieurs polymères, ce qui n'exclut pas que ce matériau puisse contenir d'autres ingrédients, qui ne sont pas des polymères, tels que des matériaux carbonés inorganiques (par exemple, du noir de carbone).

En pratiquant cette étape de mise en contact sous vide, il est ainsi possible d'accéder aux avantages suivants :
- la possibilité d'obtenir et/ou de maintenir le ou les solvants sous forme de vapeurs sans chauffage (c'est-à-dire à température ambiante), ce qui constitue un gain d'énergie substantiel par rapport aux procédés de l'art antérieur, dans lesquels les vapeurs de solvant(s) sont obtenus par chauffage ;
- la possibilité d'obtenir une modification de la surface de la pièce plus en profondeur grâce à une meilleure solubilisation de la surface de celle-ci, ce qui permet notamment à l'issue du procédé d'accéder à une pièce présentant une rugosité encore moindre et, qui plus est, d'obtenir une valeur de rugosité donnée en fonction de la durée de l'étape de mise en contact ;
- la possibilité d'aller jusqu'à une intégration d'un autre matériau au sein de la pièce polymère, ce qui confère une adhésion maximale de l'autre matériau comparativement à des techniques de dépôts standards ;
- la possibilité, lorsqu'un autre matériau est en outre apte à être solubilisé par les vapeurs de solvant(s), d'une intégration très en profondeur de cet autre matériau dans la pièce polymère.

Par ailleurs, le procédé de l'invention permet également d'accéder aux avantages suivants :
- une excellente précision, car il n'affecte pas les dimensions des pièces traitées et permet une parfaite conservation de la géométrie des pièces et un maintien des reliefs 3D sans lissage des angles vifs et des petits détails, le cas échéant, la variation dimensionnelle après traitement n'excédant pas 30 µm ;
- une couleur homogène des pièces traitées et, notamment pas de formation de taches ou zones blanches dues à la précipitation de polymère(s) même lorsque les pièces contiennent, en outre, des matériaux carbonés, tels que du noir de carbone ;
- un procédé facilement industrialisable comportant un faible nombre d'étapes, pouvant être réalisé à température ambiante, ne nécessitant pas de grandes quantités de produits (ce qui est un avantage de l'utilisation des vapeurs de solvant(s) par rapport à des techniques d'immersion dans un solvant liquide) et permettant le traitement simultané de plusieurs pièces ;
- pas de préparation préalable de la surface des pièces à traiter.

Enfin, l'utilisation de vapeurs de solvant(s) pour la mise en oeuvre du procédé de l'invention confère les avantages suivants :
- la diminution des quantités de solvant(s) utilisées par rapport à des techniques impliquant des voies liquides ;
- la non-agressivité des vapeurs vis-à-vis des pièces à traiter, la géométrie de celles-ci restant inchangée ;
- la possibilité de traiter tous les reliefs complexes des pièces, le cas échéant.

Le principe général de la présente invention repose ainsi sur la solubilisation en surface d'une pièce polymère grâce à l'action de vapeurs de solvant(s) sous vide. Sans être lié par la théorie, au contact de vapeurs de solvant(s) et dans une atmosphère de vide, les chaînes macromoléculaires du ou des polymères constitutifs de la pièce situées en surface de celle-ci se séparent et s'entourent de molécules de solvant(s) entraînant ainsi un gonflement de la surface de la pièce, la surface ainsi gonflée étant assimilable à un gel.

La formation d'un gel à la surface de la pièce polymère peut ainsi :
- après séchage et évaporation du ou des solvants, permettre d'obtenir, en surface de la pièce, une couche lisse et homogène, ce qui signifie, en d'autres termes, que la pièce peut présenter une rugosité moindre par rapport à son état d'origine (c'est-à-dire son état avant mise en contact avec les vapeurs de solvant(s)) ;
- piéger et/ou encapsuler au moins un matériau de fonctionnalisation, ce piégeage et/ou cette encapsulation se produisant concomitamment avec une diminution de la rugosité de la pièce, le ou matériaux de fonctionnalisation pouvant être recouverts d'une couche de polymère(s) constitutifs de la pièce ;
- quand le traitement consiste en une fonctionnalisation de la pièce selon un niveau d'intégration moindre que le point précédent, améliorer fortement l'adhésion entre la pièce et le ou les matériaux de fonctionnalisation.

Cette étape de mise en contact de la pièce avec les vapeurs de solvant(s) s'effectue sous vide et, plus spécifiquement, de sorte à ce que la pression résiduelle lors de cette étape soit de 100 mbar à 200 mbar, notamment lorsque la température de l'étape de mise en contact correspond à la température ambiante. Si l'étape de mise en contact est réalisée en chauffant à une température supérieure à la température ambiante, la pression résiduelle peut atteindre 500 mbars.

Cette étape de mise en contact peut être maintenue pendant une durée nécessaire pour obtenir la modification de surface de la pièce souhaitée, sachant que plus l'étape de mise en contact est maintenue longtemps, plus la modification de surface est importante.

Cette étape de mise en contact peut être réalisée à température ambiante (c'est-à-dire sans chauffage) mais peut être également réalisée en travaillant à des températures supérieures à celle de la température ambiante. En effet, en pratiquant une température supérieure à la température ambiante tout en pratiquant un vide, cela peut permettre d'atteindre plus rapidement la pression de vapeur saturante du ou des solvant(s), d'améliorer l'homogénéité de la phase vapeur et également d'augmenter les cinétiques de solubilisation du ou des polymères constitutifs de la pièce.

Après l'étape de mise en contact, le procédé comprend, avantageusement, une étape d'arrêt de l'exposition de la pièce aux vapeurs de solvant(s).

En outre, le procédé peut comprendre, de préférence après cette étape d'arrêt, une étape d'élimination du ou des solvants présents dans la pièce obtenue à l'issue de l'étape de mise en contact.

Concrètement, cette étape d'arrêt de l'exposition peut consister à extraire les vapeurs de solvant(s) du milieu dans lequel a lieu l'étape de mise en contact, par exemple, une enceinte sous vide. Dans ce cas spécifique, l'extraction peut s'effectuer par mise sous air de l'enceinte.

Quant à l'étape d'élimination, elle consiste classiquement à extraire le ou les solvants de la pièce traitée, cette élimination pouvant être réalisée par :
- chauffage de la pièce (en particulier, à une température supérieure à la température d'ébullition du ou des solvants) ;
- soumission de la pièce à une atmosphère de vide (de préférence, cette fois-ci sans présence de vapeurs de solvant(s)) ; et/ou
- application d'une boucle de balayage pour recondenser le ou les solvants piégés dans la pièce (par exemple, au moyen d'un piège à froid).

En particulier, l'élimination peut être réalisée en couplant le chauffage de la pièce et la soumission de la pièce à une atmosphère de vide.

L'élimination peut être complétée par un lavage de la pièce de sorte à éliminer les traces résiduelles de solvant(s). L'élimination du ou des solvants de la pièce traitée contribue également à préserver une couleur homogène de la pièce traitée. En effet, la présence subsistante de solvant(s) peut favoriser la précipitation du polymère en surface de la pièce et éclaircir sa couleur (soit de façon homogène soit de façon hétérogène avec des zones blanches).

La pièce polymère destinée à être traitée conformément au procédé de l'invention peut comprendre un ou plusieurs polymères choisis parmi les polyamides (tel que les polyamides-12), les polyuréthanes, les polycarbonates, les poly(méth)acrylates (tel que les polyméthacrylates de méthyle), les polysulfones (tels que les polyphénylsulfones), les polyoléfines (tels que les polyéthylènes, les polypropylènes, les COC (abréviation correspondant à la terminologie Cyclic Olefin Copolymer)), les polymères styréniques (tels que les polystyrènes, les ABS), les polyéthers (tels que les polyphénylène éthers), les poly(méth)acryliques, les polyoxazolines (tels que les poly(2-éthyl-2-oxazoline), les polyacétates (tels que les polyacétates de vinyle) et les mélanges de ceux-ci.

En particulier, la pièce polymère peut être à base d'un polyamide, tel qu'un polyamide-12.

En outre, la pièce polymère destinée à être traitée peut être amorphe, semi-cristalline voire même avec un caractère hautement cristallin.

Enfin, la pièce polymère destinée à être traitée peut être une pièce issue d'une impression 3D.

Le solvant ou les solvants utilisés pour le procédé de traitement de l'invention sont choisis parmi les solvants volatils de densité de vapeur supérieure à celle de l'air, et de préférence choisi parmi les solvants halogénés (tels que le chloropropane, le chloroforme, le dichlorométhane, le 1-bromopropane, le perchloroéthylène, le trichloroéthylène, le bromure de méthylène, le 1-chloropropane), les solvants aromatiques (tels que le xylène, le toluène, le benzène), les solvants cétoniques (tels que l'acétone, le méthyléthylcétone), les solvants alcooliques éventuellement halogénés (tels que l'éthanol, le méthanol, l'hexafluoroisopropanol), les acides (tels que l'acide nitrique, l'acide formique, l'acide phosphorique) (lesquels acides pouvant exister sous forme de solutions aqueuses) et les mélanges de ceux-ci.

Il est entendu que le choix du ou des solvants sera dicté par la nature de la pièce polymère, le ou les solvants choisis devant être aptes à solubiliser celle-ci au moins en surface de sorte à former un gel en surface de ladite pièce. Ce choix approprié pourra être effectué aisément par l'homme du métier notamment après avoir effectué des essais préalables, pour une pièce polymère donnée, avec différents solvants pour déterminer le ou les solvants les plus efficaces pour ladite pièce polymère.

En particulier, lorsque la pièce polymère est à base d'un polyamide-12, un solvant particulièrement approprié pour la mise en oeuvre du procédé de l'invention est l'hexafluoroisopropanol.

Comme évoqué plus haut, le procédé de traitement de l'invention est, plus spécifiquement, un procédé de modification de la rugosité de la surface de la pièce polymère (et plus précisément, une diminution de la rugosité de la surface de la pièce polymère) et également un procédé de fonctionnalisation de la pièce polymère avec au moins un matériau de fonctionnalisation.

Plusieurs variantes peuvent être envisagées.

Selon une première variante, avant l'étape de mise en contact, la pièce polymère peut être déjà pourvue sur tout ou partie de sa surface d'au moins un matériau de fonctionnalisation (par exemple, sous forme d'un film comprenant au moins un matériau de fonctionnalisation, tel qu'un film de particules d'au moins un matériau de fonctionnalisation), le procédé de l'invention comprenant ainsi, avant l'étape de dépôt, une étape de dépôt sur tout ou partie de la surface de la pièce polymère d'au moins un matériau de fonctionnalisation (par exemple, sous forme d'un film, tel qu'un film de particules), cette étape de dépôt pouvant être réalisée par des techniques standards de dépôt (telles que la pulvérisation, la sérigraphie).

Selon une deuxième variante, simultanément à l'étape de mise en contact, le procédé de l'invention peut comprendre une étape de dépôt sur tout ou partie de la surface de la pièce polymère d'au moins un matériau de fonctionnalisation (par exemple, sous forme d'un film), moyennant quoi le ou les matériaux de fonctionnalisation se retrouvent intégrés dans le gel formé à la surface de la pièce suite à l'action des vapeurs de solvant(s) et, par la suite, après séchage du gel, intégrés dans la pièce en polymère.

Selon une troisième variante, les vapeurs du solvant(s) utilisées lors de l'étape de mise en contact comprennent également au moins un matériau de fonctionnalisation, ce qui signifie, en d'autres termes, que l'étape de mise en contact de la pièce polymère est effectuée avec des vapeurs de solvant(s), qui comprennent, en outre, au moins un matériau de fonctionnalisation, ce ou ces matériaux de fonctionnalisation étant ainsi directement intégrés dans le gel formé suite au contact de ces vapeurs avec la pièce polymère.

Enfin, selon une quatrième variante, après l'étape de mise en contact, le procédé de l'invention peut comprendre une étape de dépôt sur tout ou partie de la surface de la pièce polymère d'au moins un matériau de fonctionnalisation, le ou les matériaux de fonctionnalisation se retrouvant intégrés dans le gel formé à la surface de la pièce suite à l'action des vapeurs de solvant(s) et, par la suite, après séchage du gel, intégrés dans la pièce en polymère

Le ou les solvants utilisés peuvent être, outre leur capacité à solubiliser au moins en partie la pièce, aptes à solubiliser le ou les matériaux de fonctionnalisation, ce qui peut permettre, notamment dans le cas de la première variante, de modifier la morphologie initiale du ou des matériaux de fonctionnalisation préalablement déposés.

Le ou les matériaux de fonctionnalisation sont:
- des polymères conducteurs de l'électricité, tels que des polymères conducteurs du type PEDOT et plus spécifiquement un mélange PEDOT :PSS (PEDOT signifiant poly(3,4-éthylènedioxythiophène et PSS signifiant polystyrènesulfonate de sodium), notamment pour améliorer la conductivité électronique de la pièce ; et/ou
- des polymères organophosphorés, notamment pour améliorer la résistance au feu de la pièce.

Le procédé de l'invention peut être mis en oeuvre dans un dispositif comprenant une enceinte destinée à réceptionner la pièce à traiter et les vapeurs de solvant(s), des moyens de régulation de la pression de ladite enceinte pour la mise sous vide de celle-ci (par exemple, *via* une pompe à vide communiquant avec l'enceinte).

Le dispositif peut comprendre également :
- un récipient disposé dans l'enceinte et destiné à accueillir le ou les solvants à l'état liquide avant la transformation en vapeurs de celui-ci ou ceux-ci ;
- un mélangeur qui permet d'obtenir une plus grande homogénéité de concentration des vapeurs de solvant(s) dans l'enceinte et donc autour de la pièce à traiter et de renouveler efficacement l'interface gaz-liquide, ce mélangeur pouvant être un barreau aimanté ou un ventilateur (dans ce dernier cas, le ventilateur sera agencé, de préférence, entre le récipient du ou des solvants à l'état liquide et la pièce à traiter, dans la direction de la hauteur de l'enceinte) ;

- un système de chauffage pour obtenir, en combinaison avec la mise sous vide, des vapeurs de solvant(s) et diminuer la durée de traitement ;
- un système d'évent, par exemple, commandable, permettant de ventiler l'enceinte, notamment pour la mise sous air de l'enceinte (de sorte à couper le vide pour l'arrêt d'exposition des vapeurs de solvant(s) à la pièce à traiter) ; et/ou
- des moyens de support de la pièce à traiter.

Les moyens de régulation de la pression, outre la mise sous vide initiale pour obtenir les vapeurs de solvant(s), peuvent être mis à profit pour recondenser les vapeurs de solvant(s) une fois le traitement achevé et ainsi extraire le ou les solvants en phase liquide du réacteur et/ou pour extraire le ou les solvants de la pièce une fois celle-ci traitée (par exemple, en replaçant l'enceinte sous vide).

Les vapeurs de solvant(s) peuvent être obtenues :
- par mise sous vide d'une source liquide du ou des solvants présents dans le dispositif;
- par injection du ou des solvants dans le dispositif préalablement mis sous vide (le ou les solvants se vaporisant ainsi immédiatement, l'éventuel excès de solvant injecté se condensant) ;
- par injection directe des vapeurs de solvant(s) dans le dispositif déjà préalablement mis sous vide.

D'autres avantages et caractéristiques de l'invention apparaîtront dans la description détaillée non limitative ci-dessous.

### BRÈVE DESCRIPTION DES DESSINS

[Fig. 1] illustre deux photographies pour la pièce avant traitement (partie gauche) et pour la pièce après traitement (partie droite) selon les modalités de l'exemple 1 ci-dessous.
[Fig. 2] est un graphique illustrant, pour l'exemple 1, l'évolution de la rugosité Ra (en µm) en fonction de la durée de traitement t (en min, respectivement 0 min, 5 min, 10 min, 20 min et 30 min).
[Fig. 3] est un graphique illustrant, pour l'exemple 2, la rugosité Ra (en µm) pour le substrat S1 (partie inférieure) avant et après dépôt (respectivement parties a) et b)) et pour le substrat S2 (partie inférieure) avant et après dépôt (respectivement parties a) et b)).
[Fig. 4] est un graphique illustrant, pour l'exemple 2, la résistivité surfacique S (en Ω/□) pour les substrats S1 et S2 avant dépôt (partie a), pour le substrat S1 (partie inférieure) après dépôt (partie b) et pour le substrat S2 (partie inférieure) après dépôt (partie c).
[Fig. 5] est un graphique illustrant, pour l'exemple 2, la résistivité surfacique S (en Ω/□) pour le substrat S1 (partie inférieure) avant et après traitement (respectivement parties a) et b)) et pour le substrat S2 (partie inférieure) avant et après traitement (respectivement parties c) et d)) ;
[Fig. 6] est un graphique illustrant, pour l'exemple 2, la rugosité Ra (en µm) pour le substrat S1 pour la partie supérieure avant et après traitement (respectivement parties a) et b)) et pour la partie inférieure avant et après traitement (respectivement parties c) et d)) et pour le substrat S2 pour la partie supérieure avant et après traitement (respectivement parties e) et f)) et pour la partie inférieure avant et après traitement (respectivement parties g) et h)).
[Fig. 7] est un graphique illustrant, pour l'exemple 3, la rugosité Ra (en µm) pour des pièces brutes témoins (c'est-à-dire dénuées de couche ignifuge et non traitées selon le procédé de l'invention) et des pièces traitées conformément au procédé de l'invention (respectivement parties a) et b)).

### EXPOSÉ DÉTAILLÉ DE MODES DE RÉALISATION PRÉFÉRÉS

### EXEMPLE 1 (Référence)

Cet exemple illustre la mise en oeuvre de l'étape de mise en contact sous vide de la pièce polymérique avec des vapeurs de solvant(s) aptes à solubiliser au moins en partie la pièce pour démontrer l'efficacité de celle-ci pour diminuer la rugosité d'une pièce comprenant du polyamide-12 réalisée par impression 3D.

La pièce à traiter est un disque d'épaisseur 5 mm et de diamètre 5 cm fabriqué par impression 3D, cette pièce étant en un matériau comprenant du polyamide 12 et du noir de carbone présentant sur sa première face une rugosité initiale (avant traitement) de 8,2 µm et sur sa deuxième face (opposée à la première face) une rugosité initiale (avant traitement) de 15,4 µm.

Le procédé de traitement est mis en oeuvre dans un dispositif du type réacteur et, plus spécifiquement, un réacteur en verre présentant un volume interne de 900 mL hermétique à l'air se composant de deux parties : un récipient et un couvercle maintenus par de la graisse siliconée. Un cristallisoir en verre de diamètre 5 cm muni d'un barreau aimanté est disposé dans la partie inférieure du réacteur et est destiné à accueillir le solvant liquide avant vaporisation. Le réacteur est posé sur un agitateur magnétique et le couvercle du réacteur est relié à une pompe à vide à membrane.

Les étapes successives suivantes sont mises en oeuvre :
a) le solvant hexafluoroisopropanol (10g) est placé dans le cristallisoir ;
b) la pièce à traiter est placée et maintenue dans la partie supérieure du réacteur grâce à un support métallique, de sorte à ce qu'elle se situe à environ 5 cm au-dessus du niveau du solvant placé dans le cristallisoir ;
c) le réacteur est refermé en positionnant le couvercle sur le récipient et en scellant le couvercle et le récipient au moyen de graisse siliconée ;
d) Le solvant placé dans le cristallisoir est soumis à une agitation magnétique suffisamment mais pas trop (800 tours/min) pour éviter toutes projections directes sur la pièce ;
e) le réacteur est mis sous vide de sorte à ce que la pression résiduelle soit de 100 mbar puis isolé une fois que cette pression résiduelle est atteinte (maintien du vide statique) ;
f) la durée de contact entre la pièce et les vapeurs de solvant est mesurée à partir du moment où la valeur de 100 mbar dans le réacteur est atteinte ;
g) après 20 minutes de traitement, le réacteur est dépressurisé ;
h) le réacteur est ouvert et la pièce est retirée ;
i) la pièce ainsi retirée est placée pendant 5 minutes dans une étuve à circulation d'air à une température de 60°C ;
j) la pièce est ensuite lavée dans un bécher de 600 mL contenant 500 mL d'eau pendant 10 minutes sous agitation (800 tours/min) ;
k) la pièce est laissée à l'air libre quelques minutes pour évaporer l'eau ;
l) la pièce peut alors être manipulée.

Selon une première variante, à partir de l'étape h), les étapes qui suivent peuvent être les suivantes :
i) la pièce est placée pendant 30 minutes dans une étuve à circulation d'air à une température de 60°C ;
j) la pièce peut alors être manipulée.

Selon une deuxième variante, à partir de l'étape f), les étapes qui suivent peuvent être les suivantes :
g) après 20 minutes de traitement, le réacteur est maintenu sous vide (vide dynamique) pendant 20 minutes ;
h) le réacteur est dépressurisé ;
i) le réacteur est ouvert et la pièce est retirée ;
k) la pièce est placée pendant 5 min dans une étuve à circulation d'air à une température de 60°C ;
l) la pièce peut être alors manipulée.

Les pièces obtenues présentent, à l'issue du traitement, une rugosité pour la première face de 1,6 µm et une rugosité pour la deuxième face de 2,4 µm.

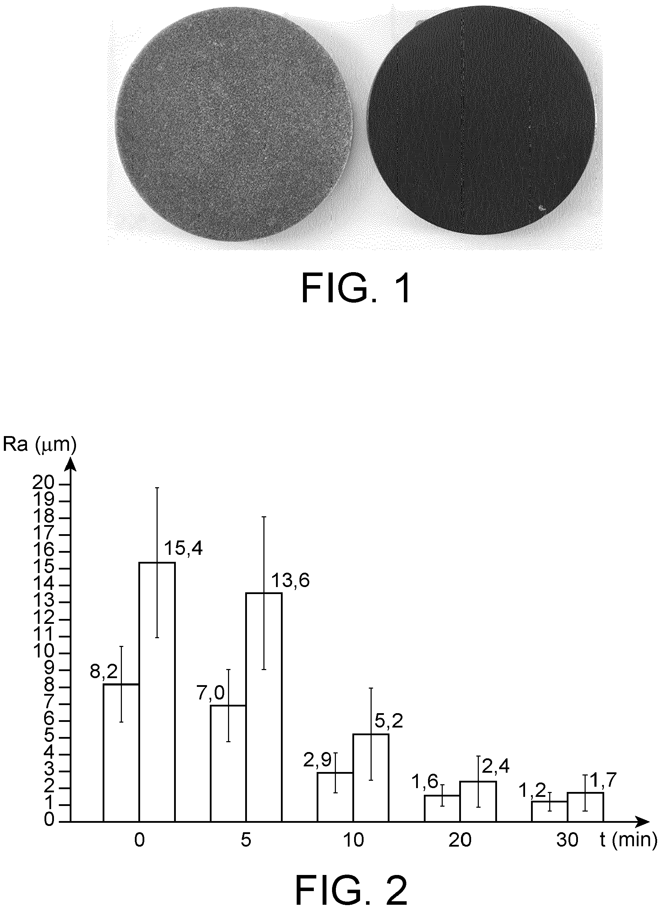

Un exemple de pièce avant traitement et de pièce après traitement sont représentées sous forme de photographies pour la pièce avant traitement (partie gauche) et pour la pièce après traitement (partie droite) sur la figure 1 jointe en annexe. La partie droite montre une pièce à surface lisse par rapport à la partie gauche montrant une pièce à surface rugueuse.

L'étape de mise en contact sous vide avec des vapeurs de solvant(s) s'avère donc extrêmement efficace pour contribuer à la diminution de rugosité d'une pièce polymère.

Il a été également procédé à la mesure de la rugosité en fonction de la durée de traitement (0 min, 5 min, 10 min, 20 min et 30 min), les autres paramètres opératoires étant ceux déjà mentionnés ci-dessus. Les résultats sont reportés sur la figure 2 jointe en annexe, qui est un graphique illustrant l'évolution de la rugosité Ra (en µm) en fonction de la durée de traitement t (respectivement 0 min, 5 min, 10 min, 20 min et 30 min). Pour chaque durée de traitement, le bâtonnet de gauche correspond à la rugosité de la première face et le bâtonnet de droite correspond à la rugosité de la deuxième face.

Il ressort que, plus la durée de traitement est importante, plus la rugosité de surface ainsi obtenue est faible. Il est ainsi possible d'ajuster la durée de traitement en fonction de la rugosité souhaitée.

### EXEMPLE 2

Cet exemple illustre la mise en oeuvre du procédé de traitement de l'invention pour démontrer l'efficacité de celui-ci pour encapsuler une couche conductrice en PEDOT :PSS dans une pièce polymère à base de polyamide-12.

Les pièces à traiter dans cet exemple consiste en deux substrats en polyamide-12 présentant une forme rectangulaire et les dimensions suivantes : 30 mm* 50 mm * 5 mm (nommés respectivement S1 et S2).

Chacun des substrats S1 et S2 est revêtu sur la partie inférieure d'une face par pulvérisation d'une couche de PEDOT :PSS (la partie supérieure étant laissée vierge à titre de référence), la quantité de polymère déposé étant moindre sur le substrat S1 que sur le substrat S2.

Une fois la couche de polymère déposée, une étape de dopage secondaire dans de l'éthylène glycol pendant 30 minutes a été réalisé pour améliorer les performances de conduction électronique. Enfin, les deux substrats ont été lavés dans de l'éthanol avant d'être séchés à 120°C pendant 30 minutes.

Les mesures de rugosité et de résistivité surfacique ont été réalisées en utilisant respectivement un profilomètre mécanique et une sonde de mesure 4 pointes, les résultats étant respectivement reportés sur :

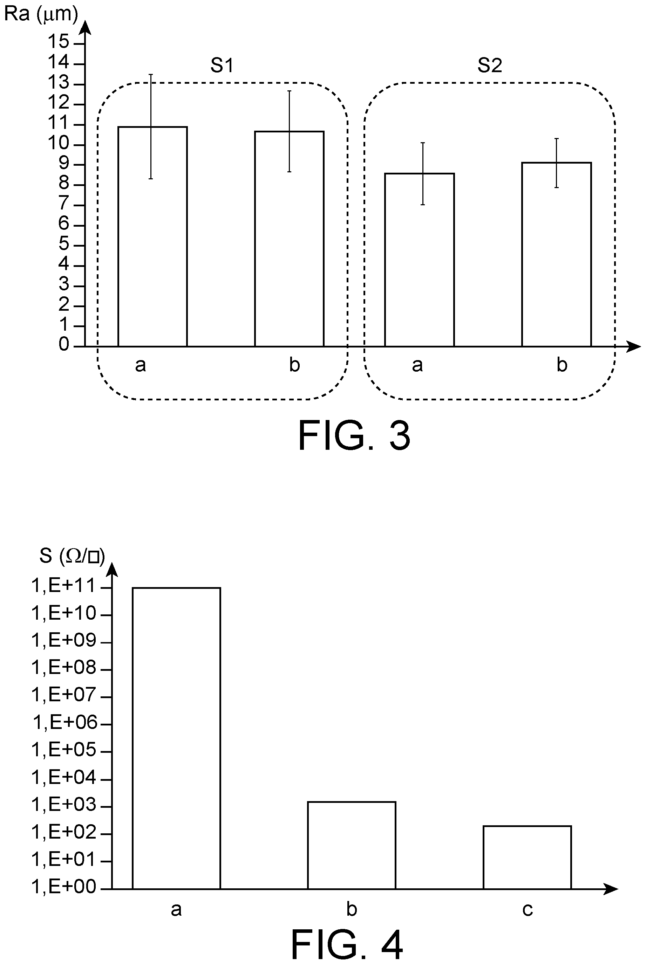

- la figure 3, qui est un graphique illustrant la rugosité Ra (en µm) pour le substrat S1 (partie inférieure) avant et après dépôt (respectivement parties a) et b) et pour le substrat S2 (partie inférieure) avant et après dépôt (respectivement parties a) et b)) mais avant mise en oeuvre du traitement;
- la figure 4, qui est un graphique illustrant la résistivité surfacique S (en Ω/□) pour les substrats S1 et S2 avant dépôt (partie a), pour le substrat S1 (partie inférieure) après dépôt (partie b) et pour le substrat S2 (partie inférieure) après dépôt (partie c) mais avant traitement.

Les mesures de Ra sont comprises entre 8 et 11 µm. Les zones sans PEDOT :PSS présentent une résistivité élevée (près de 10¹¹ Ω/□). Les résistivités obtenues avec les substrats S1 et S2 (parties inférieures) sont respectivement comprises entre 10³Ω/□ et 10² Ω/□ traduisant une couche conductrice électronique.

Les deux substrats S1 et S2 ont alors subi un traitement correspondant à une mise en contact sous vide avec des vapeurs de solvant(s) similaire à celui exposé dans l'exemple 1 ci-dessus, si ce n'est que la durée d'exposition aux vapeurs est ici limitée à 10 minutes.

A l'issue de ce traitement, des mesures de résistivité surfacique S et de rugosité Ra ont de nouveau été effectuées, les résultats étant respectivement reportés sur :

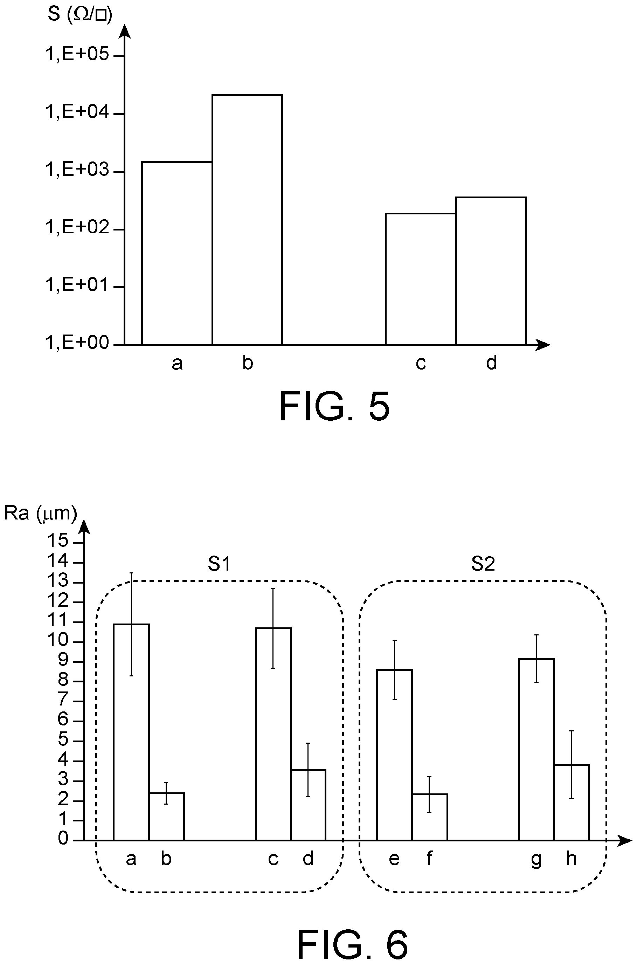

- la figure 5, qui est un graphique illustrant la résistivité surfacique S (en Ω/□) pour le substrat S1 (partie inférieure) avant et après traitement (respectivement parties a) et b)) et pour le substrat S2 (partie inférieure) avant et après traitement (respectivement parties c) et d)) ;
- la figure 6, qui est un graphique illustrant la rugosité Ra (en µm) pour le substrat S1 pour la partie supérieure avant et après traitement (respectivement parties a) et b)) et pour la partie inférieure avant et après traitement (respectivement parties c) et d)) et pour le substrat S2 pour la partie supérieure avant et après traitement (respectivement parties e) et f)) et pour la partie inférieure avant et après traitement (respectivement parties g) et h)).

Les principales conclusions sont les suivantes :
- le traitement similaire à celui de l'exemple 1 diminue la rugosité de la partie inférieure et de la partie supérieure de chacun des substrats ;
- les résistivités surfaciques restent inférieures à 10⁵ Ω/□ qu'il y ait traitement ou pas, ce qui atteste d'un maintien des propriétés de conduction électronique ;
- la résistivité surfacique semble légèrement augmenter après le traitement similaire à celui de l'exemple 1, ce qui peut attester du fait que le polyamide-12 après solubilisation a reprécipité à la surface du conducteur, ce qui, compte tenu du caractère isolant du polyamide-12, induit une augmentation de résistivité surfacique.

Concernant les valeurs de rugosité atteintes après le traitement, un traitement de 10 minutes conduit à une efficacité de 75-80% pour la couche de PA-12 seule (sans PEDOT), alors qu'elle est de 55 à 70% pour la couche de PA-12 + PEDOT.

L'efficacité de la rugosité est liée à l'épaisseur de la couche de PEDOT (efficacité moindre pour le substrat S2 par rapport au substrat S1) (dû à la cinétique de perméation de la vapeur d'hexafluoroisopropanol plus faible à travers la couche de PEDOT).

Le traitement chimique de la présente invention permet donc d'encapsuler les matériaux fonctionnels (conducteurs électroniques dans ce cas) tout en diminuant la rugosité de surface.

### EXEMPLE 3

Cet exemple illustre la mise en oeuvre du procédé de traitement de l'invention pour démontrer l'efficacité de celui-ci pour fonctionnaliser des pièces polymères à base de polyamide-12 en vue d'améliorer ses propriétés ignifuges tout en diminuant la rugosité des pièces ainsi traitées.

Les pièces à traiter dans cet exemple sont des pièces parallélépipédiques en polyamide-12 et présentant les dimensions suivantes : 127 mm * 12,7 mm^{∗} 5 mm.

Sur l'une des faces de chacune des pièces est pulvérisée une solution comprenant un monomère organophosphoré (le *bis[2-*(méthacryloyloxy)éthyl]phosphate), de l'azobisisobutyronitrile (AiBN) (qui joue le rôle d'initiateur de radicaux) et de l'acétone.

Une fois la solution déposée, un traitement thermique est réalisée à 100°C pendant une durée de 12 heures, ce qui permet à la solution de polymériser à la surface des pièces et de former ainsi une couche dense et stable à la surface des pièces.

Les pièces subissent ensuite un traitement correspondant à une mise en contact sous vide avec des vapeurs de solvant(s) similaire à celui exposé dans l'exemple 1 ci-dessus, si ce n'est que la durée d'exposition aux vapeurs est ici limitée à 10 minutes.

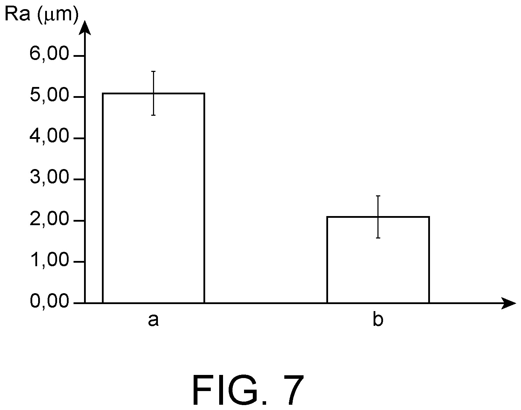

Après traitement, il est procédé à la mesure de la rugosité Ra au profilomètre mécanique, les résultats étant reportés sur la figure 7, qui illustre la rugosité Ra (en µm) pour des pièces brutes témoins (c'est-à-dire dénuées de couche ignifuge et non traitées selon le procédé de l'invention) et des pièces traitées conformément au procédé de l'invention (respectivement parties a) et b)).

Ainsi, il ressort que le traitement similaire à celui de l'exemple 1 appliqué sur des pièces préalablement traitées anti-feu permet de diminuer de plus de 60% la rugosité Ra des pièces. On obtient ainsi des rugosités de l'ordre de 2 µm.

L'évaluation du comportement ignifuge des pièces traitées est également réalisée selon la norme UL94V0. Pour cela, une flamme est appliquée sur les pièces placées verticalement pendant 10 secondes. On évalue alors la durée de combustion et d'incandescence résiduelles et la coulée de gouttes enflammées provenant de l'échantillon. Deux inflammations sont appliquées pour ce test. Cinq pièces par condition (pièces brutes témoins et pièces traitées conformément à cet exemple) ont été testées.

Alors que les pièces brutes présentent des coulées de gouttes enflammées à chaque inflammation, aucune combustion, ni incandescence, ni coulée de gouttes enflammées n'ont été observées pour les pièces traitées anti-feu et polies chimiquement (efficacité de la propriété anti feu démontrée).

De plus, sous l'effet du test d'inflammabilité, les pièces brutes présentent un effet fondu, alors que pour les pièces traitées, la formation d'une croûte sous l'effet de la flamme permet d'éviter toute inflammation ou coulées enflammées (ce qui atteste de l'efficacité des propriétés ignifuges).

En conclusion, l'étape de mise en contact sous vide avec des vapeurs de solvant(s) réalisée sur des pièces en PA-12, préalablement traitées anti-feu par un dépôt de matériaux polymères à base de composés organophosphorés, permet de réduire considérablement la rugosité de surface des pièces tout en conservant une très bonne résistance au feu.

Le traitement conforme à l'invention permet donc d'améliorer l'adhésion des matériaux fonctionnels (anti-feu dans ce cas) tout en diminuant la rugosité de surface.

## Revendications

1. Procédé de traitement d'une pièce polymère, qui est un procédé de modification de la rugosité de la surface de ladite pièce polymère et de fonctionnalisation de ladite pièce polymère, comprenant une étape de mise en contact de ladite pièce avec des vapeurs de solvant(s) aptes à solubiliser au moins en partie ladite pièce, cette étape de mise en contact étant effectuée sous vide et comprenant, avant l'étape de mise en contact ou après l'étape de mise en contact, une étape de dépôt sur tout ou partie de la pièce d'au moins un matériau de fonctionnalisation, le ou lesdits matériaux de fonctionnalisation étant des polymères conducteurs de l'électricité et/ou des polymères organophosphorés.

2. Procédé de traitement selon la revendication 1, dans lequel l'étape de mise en contact s'effectue sous vide, de sorte à ce que la pression résiduelle lors de cette étape soit de 100 mbar à 200 mbar.

3. Procédé de traitement selon la revendication 1 ou 2, dans lequel l'étape de mise en contact est réalisée à température ambiante.

4. Procédé de traitement selon l'une quelconque des revendications précédentes, comprenant, en outre, après l'étape de mise en contact, une étape d'arrêt de l'exposition de la pièce aux vapeurs de solvant(s).

5. Procédé de traitement selon l'une quelconque des revendications précédentes, comprenant une étape d'élimination du ou des solvants présents dans la pièce obtenue à l'issue de l'étape de mise en contact.

6. Procédé de traitement selon la revendication 5, dans lequel l'étape d'élimination est réalisée par :
- chauffage de la pièce à une température supérieure à la température d'ébullition du ou des solvants ;
- soumission de la pièce à une atmosphère de vide ; et/ou
- application d'une boucle de balayage pour recondenser le ou les solvants piégés dans la pièce.

7. Procédé de traitement selon l'une quelconque des revendications précédentes, dans lequel la pièce polymère comprend un ou plusieurs polymères choisis parmi les polyamides, les polyuréthanes, les polycarbonates, les poly(méth)acrylates, les polysulfones, les polyoléfines, les polymères styréniques, les polyéthers, les poly(méth)acryliques, les polyoxazolines, les polyacétates et les mélanges de ceux-ci.

8. Procédé de traitement selon l'une quelconque des revendications précédentes, dans lequel la pièce polymère est à base d'un polyamide, tel qu'un polyamide-12.

9. Procédé de traitement selon l'une quelconque revendications précédentes, dans lequel le ou les solvants sont choisis parmi les solvants halogénés, les solvants aromatiques, les solvants cétoniques, les solvants alcooliques éventuellement halogénés, les acides et les mélanges de ceux-ci.

10. Procédé de traitement selon l'une quelconque des revendications précédentes, dans lequel lorsque la pièce polymère est à base d'un polyamide-12, le solvant est de l'hexafluoroisopropanol.

11. Procédé de traitement selon l'une quelconque des revendications précédentes, dans lequel le ou les solvants sont aptes à solubiliser le ou les matériaux de fonctionnalisation.

## Patentansprüche

1. Verfahren zur Behandlung eines polymeren Werkstücks, das ein Verfahren zur Veränderung der Rauigkeit der Oberfläche des polymeren Werkstücks und der Funktionalisierung des polymeren Werkstücks ist, umfassend einen Schritt eines Inkontaktbringens des Werkstücks mit Dämpfen eines oder mehrerer Lösungsmittel, die dazu geeignet sind, mindestens einen Teil des Werkstücks zu solubilisieren, wobei dieser Schritt des Inkontaktbringens unter Vakuum ausgeführt wird, und vor dem Schritt des Inkontaktbringens oder nach dem Schritt des Inkontaktbringens umfassend einen Schritt eines Abscheidens mindestens eines Funktionalisierungsmaterials auf dem gesamten oder einem Teil des Werkstücks, wobei das oder die Funktionalisierungsmaterialien elektrisch leitfähige Polymere und/oder phosphororganische Polymere sind.

2. Behandlungsverfahren nach Anspruch 1, wobei der Schritt des Inkontaktbringens unter Vakuum ausgeführt wird, so dass der Restdruck während dieses Schritts 100 mbar bis 200 mbar beträgt.

3. Behandlungsverfahren nach Anspruch 1 oder 2, wobei der Schritt des Inkontaktbringens bei Umgebungstemperatur durchgeführt wird.

4. Behandlungsverfahren nach einem der vorhergehenden Ansprüche, weiterhin umfassend nach dem Schritt des Inkontaktbringens einen Schritt eines Stoppens der Aussetzung des Werkstücks gegenüber den Dämpfen eines oder mehrerer Lösungsmittel.

5. Behandlungsverfahren nach einem der vorhergehenden Ansprüche, umfassend einen Schritt eines Eliminierens des oder der Lösungsmittel, die in dem Werkstück vorhanden sind, das am Ende des Schritts des Inkontaktbringens erhalten wird.

6. Behandlungsverfahren nach Anspruch 5, wobei der Schritt des Eliminierens durchgeführt wird durch:
- Erhitzen des Werkstücks bei einer Temperatur, die höher als die Siedetemperatur des oder der Lösungsmittel ist;
- Unterziehen des Werkstücks einer Vakuumatmosphäre und/oder
- Anwenden einer Kehrschleife, um das/die in dem Werkstück eingeschlossene(n) Lösungsmittel erneut zu kondensieren.

7. Behandlungsverfahren nach einem der vorhergehenden Ansprüche, wobei das polymere Werkstück ein oder mehrere Polymere umfasst, die aus Polyamiden, Polyurethanen, Polycarbonaten, Poly(meth)acrylaten, Polysulfonen, Polyolefinen, Styrolpolymeren, Polyethern, Poly(meth)acrylen, Polyoxazolinen, Polyacetaten und Gemischen dieser ausgewählt sind.

8. Behandlungsverfahren nach einem der vorhergehenden Ansprüche, wobei das polymere Werkstück auf der Basis eines Polyamids, wie eines Polyamids-12, ist.

9. Behandlungsverfahren nach einem der vorhergehenden Ansprüche, wobei das oder die Lösungsmittel aus halogenierten Lösungsmitteln, aromatischen Lösungsmitteln, ketonischen Lösungsmitteln, alkoholischen, gegebenenfalls halogenierten Lösungsmitteln, Säuren und Gemischen dieser ausgewählt sind.

10. Behandlungsverfahren nach einem der vorhergehenden Ansprüche, wobei, wenn das polymere Werkstück auf der Basis eines Polyamids-12 ist, das Lösungsmittel Hexafluorisopropanol ist.

11. Behandlungsverfahren nach einem der vorhergehenden Ansprüche, wobei das oder die Lösungsmittel dazu geeignet sind, das oder die Funktionalisierungsmaterialien zu solubilisieren.

## Claims

1. Method for treating a polymer part, which is a method for modifying the roughness of the surface of said polymer part and for functionalising said polymer part, comprising a step of bringing said part into contact with vapours of solvent(s), capable of at least partly solubilising said part, this contacting step being carried out under vacuum and comprising, before the contacting step or after the contacting step, a step of depositing over all or part of the part at least one functionalising material, the functionalising material(s) being electrically conductive polymers and/or organophosphorus polymers.

2. Treatment method according to claim 1, wherein the contacting step is performed under vacuum, such that the residual pressure during this step is 100 mbar to 200 mbar.

3. Treatment method according to claim 1 or 2, wherein the contacting step is performed at ambient temperature.

4. Treatment method according to any of the preceding claims, further comprising, after the contacting step, a step of stopping the exposure of the part to the vapours of solvent(s).

5. Treatment method according to any of the preceding claims, comprising a step of eliminating the solvent(s) present in the part obtained at the end of the contacting step.

6. Treatment method according to claim 5, wherein the eliminating step is performed by:
- heating the part to a temperature higher than the boiling temperature of the solvent(s);
- subjecting the part to a vacuum atmosphere; and/or
- applying a scanning loop for recondensing the solvent(s) trapped in the part.

7. Treatment method according to any of the preceding claims, wherein the polymer part comprises one or more polymers selected from polyamides, polyurethanes, polycarbonates, poly(meth)acrylates, polysulfones, polyolefins, styrenic polymers, polyethers, poly(meth)acrylics, polyoxazolines, polyacetates and mixtures thereof.

8. Treatment method according to any of the preceding claims, wherein the polymer part is based on a polyamide, such as polyamide 12.

9. Treatment method according to any of the preceding claims, wherein the solvent(s) are selected from halogenated solvents, aromatic solvents, ketonic solvents, alcoholic solvents which may be halogenated, acids and mixtures thereof.

10. Treatment method according to any of the preceding claims, wherein when the polymer part is based on polyamide 12, the solvent is hexafluoroisopropanol.

11. Treatment method according to any of the preceding claims, wherein the solvent(s) are capable of solubilising the functionalising material(s).
